(19) Europäisches Patentamt
European Patent Office
Office européen des brevets

(11) **EP 2 234 855 B1**

(12) **EUROPÄISCHE PATENTSCHRIFT**

(45) Veröffentlichungstag und Bekanntmachung des Hinweises auf die Patenterteilung:
**09.08.2017 Patentblatt 2017/32**

(21) Anmeldenummer: **09703137.1**

(22) Anmeldetag: **13.01.2009**

(51) Int Cl.:
**B60T 17/02** (2006.01)     **F04B 35/00** (2006.01)

(86) Internationale Anmeldenummer:
**PCT/EP2009/000142**

(87) Internationale Veröffentlichungsnummer:
**WO 2009/092532 (30.07.2009 Gazette 2009/31)**

(54) **KOMPRESSOR UND VERFAHREN ZUR STEUERUNG EINES KOMPRESSORS ZUR DRUCKLUFTVERSORGUNG EINES NUTZFAHRZEUGS**

COMPRESSOR AND METHOD FOR CONTROLLING A COMPRESSOR FOR THE COMPRESSED AIR SUPPLY OF A UTILITY VEHICLE

COMPRESSEUR ET PROCÉDÉ DE RÉGULATION D'UN COMPRESSEUR POUR ALIMENTER UN VÉHICULE UTILITAIRE EN AIR COMPRIMÉ

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **22.01.2008   DE 102008005428**

(43) Veröffentlichungstag der Anmeldung:
**06.10.2010   Patentblatt 2010/40**

(73) Patentinhaber: **KNORR-BREMSE Systeme für Nutzfahrzeuge GmbH**
**80809 München (DE)**

(72) Erfinder: **HEBRARD, Gilles**
**F-14000 Caen (FR)**

(74) Vertreter: **Schönmann, Kurt**
**Knorr-Bremse,**
**Moosacher Strasse 80**
**80809 München (DE)**

(56) Entgegenhaltungen:
**EP-A- 1 396 406     WO-A-98/07588**
**DE-A1- 19 737 051**

**Beschreibung**

Die Erfindung betrifft ein Kompressorsystem zur Druckluftversorgung eines Nutzfahrzeugs, wobei das Kompressorsystem einen Kompressor zur Drucklufterzeugung, ein Getriebe zur Übertragung von Drehmoment von einem Antriebsmotor auf den Kompressor, eine Kupplung zum Trennen der Verbindung zwischen Kompressor und Antriebsmotor und ein Steuergerät zum Öffnen und Schließen der Kupplung umfasst. Ein im dem Stand der Technik enthaltenes Beispiel dieser Systeme ist im Dokument EP 1 396 406 offenbart. Die Erfindung betrifft weiterhin ein Verfahren zur Steuerung eines von einem Antriebsmotor eines Nutzfahrzeugs angetriebenen Kompressorsystems zur Druckluftversorgung des Nutzfahrzeugs, wobei das Kompressorsystem einen Kompressor zur Drucklufterzeugung, ein Getriebe zur Übertragung von Drehmoment von dem Antriebsmotor auf den Kompressor, eine Kupplung zum Trennen der Verbindung zwischen Kompressor und Antriebsmotor und ein Steuergerät zum Öffnen und Schließen der Kupplung umfasst.

Um den Druckluftbedarf von Teilsystemen moderner Nutzfahrzeuge befriedigen zu können, werden die einer Druckluftversorgungseinrichtung zugehörigen Kompressoren mit einem sinkenden Übersetzungsverhältnis ausgestattet. Das Übersetzungsverhältnis $i$ zwischen der Drehzahl der Antriebswelle $n_{Antrieb}$, die mit der Motordrehzahl identisch ist, und der Drehzahl der Abtriebswelle $n_{Abtrieb}$, die mit der Kompressordrehzahl identisch ist, ist dabei als

$$i = \frac{n_{Antrieb}}{n_{Abtrieb}}$$

definiert und wird möglichst klein gewählt.

Dies ist vorteilhaft, da insbesondere bei geringen Motordrehzahlen oft ein erhöhter Luftbedarf des Nutzfahrzeugs vorliegt. Beispielsweise ist dies der Fall bei einem Containerwechselbetrieb oder bei einem Bus, der eine Haltestelle anfährt. Letzterer muss dort anhalten, die Türen öffnen, die Luftfederung zunächst entlüften, um ein komfortables Aussteigen bei niedrigem Bodenniveau des Busses zu ermöglichen, die Türen wieder schießen und anschießend die Luftfederung wieder vor dem Anfahren belüften. Alle genannten Vorgänge verbrauchen viel Luft, die bei geringer Motordrehzahl aufgebracht werden muss.

Durch das sinkende Übersetzungsverhältnis wird jedoch die geförderte Luftmenge nicht nur bei niedrigen, sondern auch bei hohen Motordrehzahlen stark erhöht, wodurch extreme Belastungen des Kompressors entstehen können. Dies gilt insbesondere, da die Nenndrehzahl des Motors von ungefähr 2000 Umdrehungen pro Minute durch die Bremsdrehzahl ($\sim$ 2400 U/min) im Falle einer Motorbremsung deutlich überschritten werden kann. Problematisch hierbei ist, dass bei Durchführung einer Motorbremsung eine Abschaltung des Kompressors durch die Kupplung zur Materialschonung nicht erwünscht ist, da eventuell Luft für die Betriebsbremse zum Abbremsen des Fahrzeugs benötigt wird. Dieser Luftverbrauch ist sogar anzunehmen, da das Nutzfahrzeug bereits durch die Motorbremse abgebremst werden soll.

Der Erfindung liegt die Aufgabe zugrunde, ein Kompressorsystem bereitzustellen, das mit einem Übersetzungsverhältnis deutlich kleiner als Eins betrieben werden kann, wobei insbesondere die an dem Kompressor auftretende thermische und mechanische Belastung bei hohen Motordrehzahlen reduziert wird.

Diese Aufgabe wird durch die Merkmale der unabhängigen Ansprüche gelöst.

Vorteilhafte Ausgestaltungen und Weiterbildungen der Erfindung ergeben sich aus den abhängigen Ansprüchen.

Die Erfindung baut auf dem gattungsgemäßen Kompressorsystem dadurch auf, dass das Steuergerät geeignet ist, die Kupplung bei Überschreiten einer einstellbaren maximal erlaubten Kompressordrehzahl oder Motordrehzahl des Antriebsmotors zu öffnen und die geöffnete Kupplung zeitweise zu schließen, während die Motordrehzahl größer als die maximal erlaubte Motordrehzahl ist. Durch das Öffnen der Kupplung wird die mechanische und thermische Belastung des Kompressors bei Überschreiten einer einstellbaren maximal erlaubten Drehzahl zunächst auf Null reduziert. Durch das anschließende zeitweise Schließen der Kupplung, während die Motordrehzahl größer als die maximal erlaubte Motordrehzahl ist, wird zum einen die benötigte Drucklufterzeugung aufrechterhalten und zum anderen die mittlere thermische und mechanische Belastung des Kompressors gegenüber dem Dauerbetrieb reduziert. Typische Übersetzungsverhältnisse, bei der der Einsatz eines erfindungsgemäßen Kompressorsystems besonders bevorzugt ist, liegen zwischen 0,4 und 0,7, wobei der erfindungsgemäße Kompressor jedoch allgemein einsetzbar ist, wenn kleine Übersetzungsverhältnisse beziehungsweise hohe Nenndrehzahlen des Antriebsmotors in hohen Kompressordrehzahlen resultieren.

Nützlicherweise kann auch vorgesehen sein, dass das Steuergerät geeignet ist, die Kupplung zu öffnen, wenn ein in dem Druckluftversorgungssystem des Nutzfahrzeugs vorhandener Druck einen einstellbaren Abschaltdruck übersteigt. Sind die Vorratsbehältnisse für Druckluft des Nutzfahrzeugs ausreichend befüllt, so ist eine weitere Erzeugung von Druckluft durch den Kompressor überflüssig. Der in dem Druckluftversorgungssystem des Nutzfahrzeugs herrschende Druck kann als einfacher Indikator für den Befüllungsgrad herangezogen werden.

Vorteilhafterweise kann auch vorgesehen sein, dass das Streuergerät geeignet ist, die Kupplung zu öffnen, während der Antriebsmotor gestartet wird. Durch das Öffnen der Kupplung, während der Antriebsmotor gestartet wird, ist das durch einen Anlasser aufzubringende Drehmoment zum Starten des Antriebsmotors reduzierbar.

Weiterhin kann vorgesehen sein, dass ein Temperatursensor vorgesehen ist, der die Temperatur des Kompressors erfasst. Die Temperatur des Kompressors kann als Maß für die thermische Belastung des Kompressors herangezogen werden.

Insbesondere kann vorgesehen sein, dass das Getriebe eine Übersetzung kleiner als Eins aufweist. Durch die Verwendung einer Übersetzung kleiner als Eins erhöht sich die Kompressordrehzahl im Verhältnis zur Motordrehzahl und in folge dessen das Volumen der erzeugten Druckluft bei einer bestimmten Drehzahl des Antriebsmotors. Auf diese Weise kann insbesondere bei kleinen Motordrehzahlen die benötigte Druckluftmenge schnell beschafft werden.

Die Erfindung betrifft weiterhin ein Nutzfahrzeug mit einem erfindungsgemäßen Kompressorsystem.

Die Erfindung baut auf dem gattungsgemäßen Verfahren dadurch auf, dass die Kupplung bei Überschreiten einer einstellbaren maximal erlaubten Kompressordrehzahl oder Motordrehzahl des Antriebsmotors geöffnet wird und dass die geöffnete Kupplung zeitweise geschlossen wird, während die Motordrehzahl größer als die maximal erlaubte Motordrehzahl ist.

Auf diese Weise werden die Vorteile und Besonderheiten des erfindungsgemäßen Kompressorsystems auch im Rahmen eines Verfahrens umgesetzt. Dies gilt auch für die nachfolgend angegebenen besonders bevorzugten Ausführungsformen des erfindungsgemäßen Verfahrens.

Dieses wird in nützlicher Weise dadurch weitergebildet, dass die Kupplung geöffnet wird, wenn ein in dem Druckluftversorgungssystem des Nutzfahrzeugs vorhandener Druck einen einstellbaren Abschaltdruck übersteigt.

Weiterhin kann vorgesehen sein, dass die Kupplung geöffnet wird, während der Antriebsmotor gestartet wird.

Es kann auch vorgesehen sein, dass die Kupplung geöffnet wird, wenn eine gemessene Temperatur des Kompressors eine einstellbare maximal erlaubte Temperatur übersteigt.

In diesem Zusammenhang kann weiterhin vorgesehen sein, dass die Kupplung zeitweise geschlossen wird, während eine gemessene Temperatur des Kompressors eine einstellbare maximal erlaubte Temperatur übersteigt.

Insbesondere kann vorgesehen sein, dass das Getriebe die Motordrehzahl mit einer Übersetzung kleiner als Eins auf den Kompressor überträgt.

Die Erfindung wird nun mit Bezug auf die begleitenden Zeichnungen anhand besonders bevorzugter Ausführungsformen beispielhaft erläutert.

Es zeigen:

Figur 1     eine schematisch vereinfachte Darstellung eines Fahrzeugs mit einem erfindungsgemäßen Kompressorsystem;

Figur 2     zwei Schaltstrategien zum Betreiben eines Kompressorsystems;

Figur 3     eine erfindungsgemäße Schaltstrategie zum Betreiben eines Kompressorsystems und

Figur 4     ein Flussdiagramm an dem die einzelnen Verfahrensschritte erläutert werden.

In den nachfolgenden Zeichnungen bezeichnen gleiche Bezugszeichen gleiche oder gleichartige Teile.

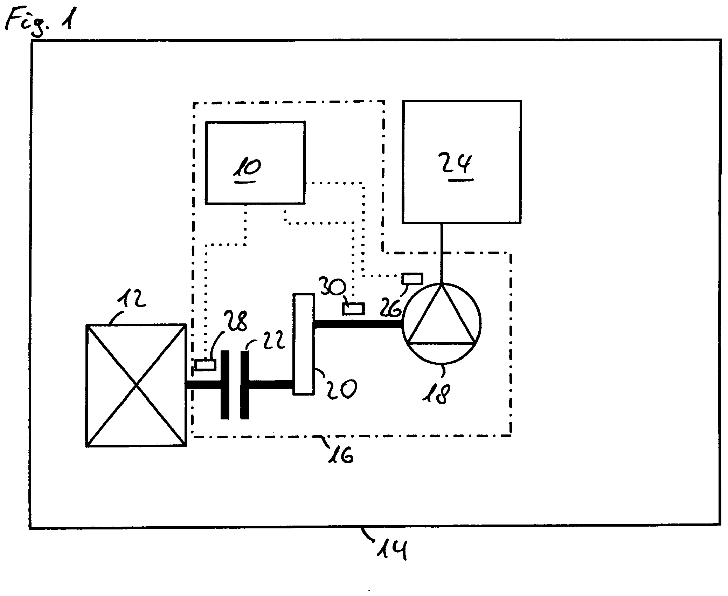

Figur 1 zeigt eine schematisch vereinfachte Darstellung eines Fahrzeugs mit einem erfindungsgemäßen Kompressorsystem 16. Das Nutzfahrzeug 14 wird von einem Antriebsmotor 12 angetrieben. Der Antriebsmotor 12 treibt über ein Getriebe 20 weiterhin einen Kompressor 18 an, der Luft in komprimierter Form einem Druckluftversorgungssystem 24 zur Verfügung stellt. Das Getriebe 20 besitzt ein Übersetzungsverhältnis $i$ kleiner als Eins, das heißt die Antriebsdrehzahl $n_{Antrieb}$, die mit der Motordrehzahl identisch ist, ist größer als die Abtriebsdrehzahl $n_{Abtrieb}$, die mit der Kompressordrehzahl identisch ist. Die Kompressordrehzahl ist also immer um den festen Faktor $i$ größer als die Motordrehzahl. Zwischen dem Getriebe 20 und dem Antriebsmotor 12 ist eine Kupplung 22 angeordnet, über die der Kompressor 18 von dem Antriebsmotor 12 getrennt werden kann. Die Reihenfolge von Getriebe 20 und Kupplung 22 kann auch umgekehrt sein, was sogar die gängigere Anordnungsweise ist, da das Getriebe 20 üblicherweise als ein Bestandteil des Antriebsmotors 12 ausgebildet ist, wobei dann ein Zahnrad auf der Kompressorkurbelwelle befestigt ist. Der Kompressor 18 bildet zusammen mit dem Getriebe 20, der Kupplung 22 und einem weiterhin in dem Nutzfahrzeug 14 angeordneten Steuergerät 10 ein Kompressorsystem 16. In dem Kompressorsystem 16 sind weiterhin Drehzahlsensoren 28, 30 und ein Temperatursensor 26 vorgesehen, wobei die Drehzahlsensoren 28, 30 die Motordrehzahl beziehungsweise die Kompressordrehzahl erfassen, während der Temperatursensor 26 die Kompressortemperatur erfasst. Das Steuergerät 10 ist mit den Drehzahlsensoren 28, 30 und dem Temperatursensor 26 gekoppelt und ist in der Lage die Kupplung 22 zu öffnen und zu schließen. Die Drehzahlüberwachung des Kompressors kann auch ohne die Drehzahlsensoren 28, 30 erfolgen, wobei dann über einen Fahrzeugbus, zum Beispiel der CAN-Bus, die üblicherweise bekannte Motordrehzahl an das Steuergerät 10 übermittel wird, welches dann im Zusammenhang mit der Übersetzung des Getriebes 20 die Kompressordrehzahl bestimmt. Die Bestimmung über die Motordrehzahl ist sogar bevorzugt, da dann auf separate Drehzahlsensoren 28, 30 zur direkten Bestimmung der Kompressordrehzahl verzichtet werden kann. Typische Übersetzungsverhältnisse, bei der der Einsatz eines erfindungsgemäßen Kompressorsystems besonders bevorzugt ist, liegen zwischen 0,4 und 0,7, wobei das erfindungsgemäße Kompressorsystem auch bei anderen Übersetzungsverhältnissen einsetzbar ist.

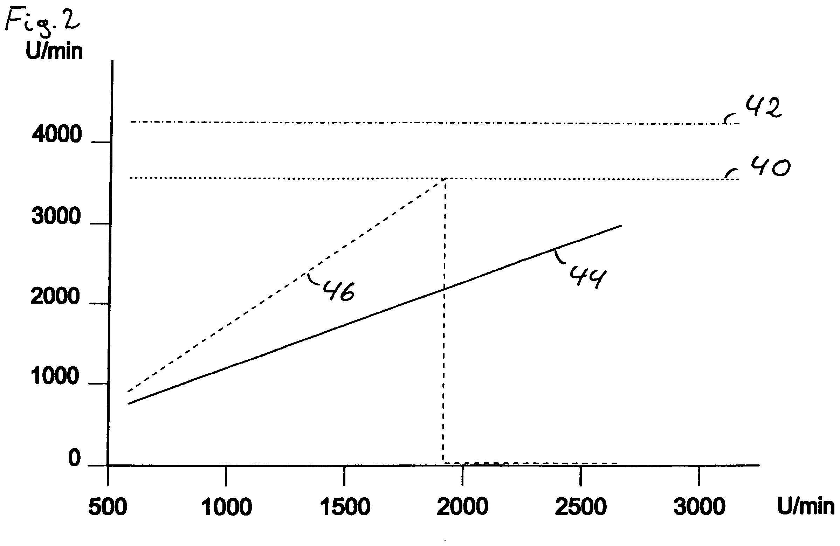

Figur 2 zeigt zwei Schaltstrategien zum Betreiben eines Kompressorsystems. Aufgetragen sind auf der x-Achse die Motordrehzahl und auf der y-Achse die Kompressordrehzahl. Parallel zur x-Achse sind weiterhin eine permanent erlaubte Kompressordrehzahl 40 und eine kurzfristig erlaubte Kompressordrehzahl 42 eingezeichnet. Eine erste Kompressordrehzahlkurve 44 verbleibt aufgrund des gewählten Übersetzungsverhältnisses unabhängig von der Motordrehzahl unterhalb der permanent erlaubten Kompressordrehzahl 40. Das Schalten des Kompressors über die Kupplung ist daher nicht notwendig. Eine zweite Kompressordrehzahlkurve 46 würde bei einer Motordrehzahl von circa 1900 Umdrehungen pro Minute die permanent erlaubte Kompressordrehzahl 40 überschreiten. An diesem Punkt wird die Kupplung geöffnet, woraufhin die Kompressordrehzahl auf Null abfällt und bei weiter steigender Motordrehzahl auch bei Null verbleibt. Diese Schaltstrategie ist nachteilig, da die Luftförderung durch das Öffnen der Kupplung bei einer hohen Motordrehzahl vollständig gestoppt wird.

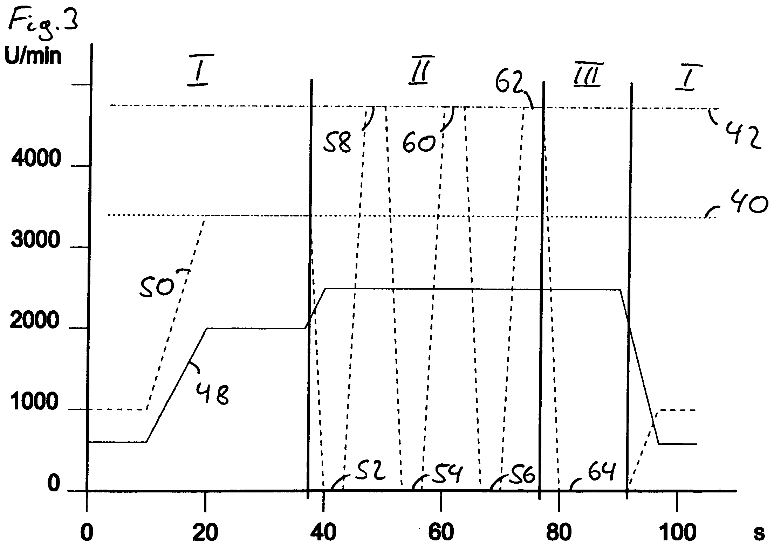

Figur 3 zeigt eine erfindungsgemäße Schaltstrategie zum Betreiben eines Kompressorsystems. Aufgetragen sind auf der x-Achse die Zeit und auf der y-Achse die Motordrehzahl beziehungsweise die Kompressordrehzahl. Parallel zur x-Achse sind wieder die permanent erlaubte Kompressordrehzahl 40 und die kurzfristig erlaubte Kompressordrehzahl 42 eingezeichnet. Eine eingezeichnete Motordrehzahlkurve 48 wächst ausgehend von der Leerlaufdrehzahl von circa 600 Umdrehungen pro Minute bis zur Nenndrehzahl des Antriebsmotors von circa 2000 Umdrehungen pro Minute an, um über die Bremsdrehzahl des Antriebsmotors von circa 2400 Umdrehungen pro Minute wieder bis zur Leerlaufdrehzahl abzufallen. Eine erfindungsgemäße Kompressordrehzahlkurve 50 kennzeichnet die der Motordrehzahlkurve 48 zugehörige Kompressordrehzahl. Während einer ersten Phase I, die von Null bis circa 36 Sekunden reicht, ist die Kupplung 22 des Kompressors 18 geschlossen und der Kompressor 18 befindet sich in permanentem Betrieb. Bei Erreichen der Nenndrehzahl des Antriebsmotors 12 erreicht die erfindungsgemäße Kompressordrehzahlkurve 50 die permanent erlaubte Kompressordrehzahl 40. Durch das Einleiten einer Motorbremsung erreicht der Antriebsmotor 12 in einer Phase II die Bremsdrehzahl. Die der Bremsdrehzahl zugehörige Kompressordrehzahl bei geschlossener Kupplung entspricht der kurzfristig erlaubten Kompressordrehzahl 42, die größer als die permanent erlaubte Kompressordrehzahl 40 ist. Deshalb wird zunächst am Beginn der Phase II die Kupplung 22 durch das Steuergerät 10 geöffnet, weshalb die Kompressordrehzahlkurve 50 auf Null abfällt und während eines Abschaltintervalls 52 bei diesem Wert verharrt. Um die Erzeugung von Druckluft wieder aufnehmen zu können, wird am Ende des Abschaltintervalls 52 die Kupplung 22 wieder geschlossen, weshalb der Kompressor 18 nach kurzer Zeit die kurzfristig erlaubte Kompressordrehzahl 42 erreicht und während eines Lastintervalls 58 diesen Wert beibehält. Mit Ende des Lastintervalls 58 wird die Kupplung 22 wieder geöffnet und ein weiteres Abschaltintervall 54 eingeleitet. Weitere Lastintervalle 60, 62 und ein Abschaltintervall 56 folgen. Am Ende des Lastintervalls 62 beginnt auch der dritte Bereich III, der durch ein langes Abschaltintervall 64 gekennzeichnet ist. Am Ende des Lastintervalls 62 erreicht das Druckluftversorgungssystem 24 in diesem Beispiel seinen Abschaltdruck, da die Vorratsbehältnisse des Druckluftversorgungssystems 24 gefüllt sind. Um Energie einzusparen, wird die Kupplung 22 des Kompressors 18 dauerhaft geöffnet. Am Ende der dritten Phase III unterschreitet die in dem Druckluftversorgungssystem gespeicherte Luftmenge ein vorgegebenes Minimum, das heißt ein gemessener Einschaltdruck wird unterschritten. Infolge dessen wird die Kupplung 22 wieder geschlossen. Da gleichzeitig die Motorbremsung beendet ist und die Motordrehzahl des Antriebsmotors 12 unterhalb der Nenndrehzahl des Antriebsmotors 12 liegt, bleibt die Kupplung 22 geschlossen und der Kompressor 18 wird wieder permanent betrieben.

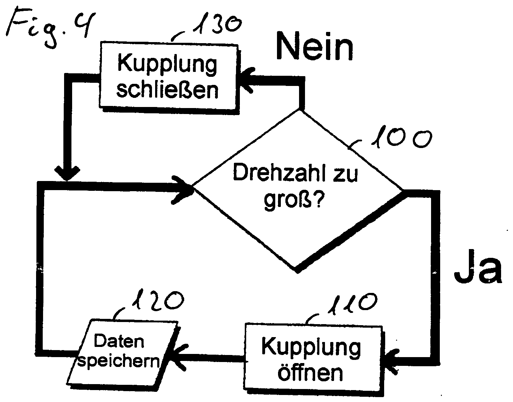

Figur 4 zeigt ein Flussdiagramm an dem die einzelnen Verfahrensschritte erläutert werden. Ausgehend von Schritt 100 wird Überprüft, ob die Motordrehzahl des Antriebsmotors 12 beziehungsweise die Kompressordrehzahl des Kompressors 18 größer als eine maximal erlaubte Drehzahl ist. Dies kann entweder durch Überwachung der Motordrehzahl des Antriebsmotors 12, der Kompressordrehzahl oder der Gaspedalstellung im Zusammenhang mit der Gangwahl erfolgen. Eine direkte Überwachung der Temperatur des Kompressors 18 ist ebenfalls denkbar, da die thermische Belastung des Kompressors 18 mit der Kompressordrehzahl zusammenhängt. Weiterhin kann die Motorlast des Antriebsmotors 12 berücksichtigt werden, insbesondere falls eine zusätzliche Aufladung des Kompressors 18 durch einen Turbolader vorgesehen ist. Ist die von dem Kompressor 18 erreichte Kompressordrehzahl größer als die erlaubte Drehzahl, 100-Ja, wird bei 110 die Kupplung 22 von dem Steuergerät 10 geöffnet. Anschließend wird bei 120 das Öffnen der Kupplung 22 zur späteren Diagnose oder statistischen Auswertung gespeichert. Im Folgenden wird wieder bei 100 fortgefahren. Ist die Kompressordrehzahl geringer als die maximal erlaubte Drehzahl, 100-Nein, wird bei 130 fortgefahren. Das Steuergerät 10 schließt die Kupplung 22, um die Luftförderung des Kompressors 18 wieder aufzunehmen. Anschließend wird bei 100 fortgefahren. Zu beachten ist, dass bei 100 nicht die aktuelle Kompressordrehzahl des Kompressors 18 zu berücksichtigen ist, sondern vielmehr die Drehzahl, die der Kompressor 18 hätte, wenn die Kupplung 22 geschlossen wäre. Weiterhin ist anzumerken, dass das Einschalten des Kompressors 18 auch bei einem niedrigeren als dem üblichen Einschaltdruck erfolgen kann. Der Einschaltdruck muss jedoch immer oberhalb des gesetzlich vorgeschriebenen Mindestdrucks liegen. Dadurch wird der Schutz des Kompressors 18 gegenüber mechanischer Überbeanspruchung bei hohen Drehzahlen weiter verbessert, weil es weniger oft zur Betätigung des Kompressors 18 bei hohen Drehzahlen kommt.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

**Bezugszeichenliste**

| | |
|---|---|
| 10 | Steuergerät |
| 12 | Antriebsmotor |
| 14 | Nutzfahrzeug |
| 16 | Kompressorsystem |
| 18 | Kompressor |
| 20 | Getriebe |
| 22 | Kupplung |
| 24 | Druckluftversorgungssystem |
| 26 | Temperatursensor |
| 28 | Motordrehzahlsensor |
| 30 | Kompressordrehzahlsensor |
| 40 | permanent erlaubte Kompressordrehzahl |
| 42 | kurzfristig erlaubte Kompressordrehzahl |
| 44 | erste Kompressordrehzahlkurve |
| 46 | zweite Kompressordrehzahlkurve |
| 48 | Motordrehzahlkurve |
| 50 | erfindungsgemäße Kompressordrehzahlkurve |
| 52 | Abschaltintervall |
| 54 | Abschaltintervall |
| 56 | Abschaltintervall |
| 58 | Lastintervall |
| 60 | Lastintervall |
| 62 | Lastintervall |
| 64 | Abschaltintervall |
| 100 | Drehzahl größer erlaubte Drehzahl? |
| 110 | Kupplung öffnen |
| 120 | Daten speichern |
| 130 | Kupplung schließen |
| I | permanenter Betrieb |
| II | Intervallbetrieb |
| III | Kompressor deaktiviert |

**Patentansprüche**

1. Kompressorsystem (16) zur Druckluftversorgung eines Nutzfahrzeugs (14), wobei das Kompressorsystem (16)

  - einen Kompressor (18) zur Drucklufterzeugung,
  - ein Getriebe (20) zur Übertragung von Drehmoment von einem Antriebsmotor (12) auf den Kompressor (18),
  - eine Kupplung (22) zum Trennen der Verbindung zwischen Kompressor (18) und Antriebsmotor (12) und
  - ein Steuergerät (10) zum Öffnen und Schließen der Kupplung (22) umfasst,

  **dadurch gekennzeichnet, dass** das Steuergerät (10) geeignet ist, die Kupplung (22) bei Überschreiten einer einstellbaren maximal erlaubten Kompressordrehzahl oder Motordrehzahl des Antriebsmotors (12) zu öffnen und die geöffnete Kupplung (22) zeitweise zu schließen, während die Motordrehzahl größer als die maximal erlaubte Motordrehzahl ist.

2. Kompressorsystem (16) nach Anspruch 1, **dadurch gekennzeichnet, dass** das Steuergerät (10) geeignet ist, die Kupplung (22) zu öffnen, wenn ein in dem Druckluftversorgungssystem (24) des Nutzfahrzeugs (14) vorhandener Druck einen einstellbaren Abschaltdruck übersteigt.

3. Kompressorsystem (16) nach Anspruch 1 oder 2, **dadurch gekennzeichnet, dass** das Steuergerät (10) geeignet ist, die Kupplung (22) zu öffnen, während der Antriebsmotor (12) gestartet wird.

4. Kompressorsystem (16) nach einem der vorhergehenden Ansprüche, **dadurch gekennzeichnet, dass** ein Temperatursensor (26) vorgesehen ist, der die Temperatur des Kompressors (18) erfasst.

5. Kompressorsystem (16) nach einem der vorhergehenden Ansprüche, **dadurch gekennzeichnet, dass** das Getriebe (20) eine Übersetzung kleiner als Eins aufweist.

6. Nutzfahrzeug (14) mit einem Kompressorsystem (16) nach einem der vorhergehenden Ansprüche.

7. Verfahren zur Steuerung eines von einem Antriebsmotor (12) eines Nutzfahrzeugs (14) angetriebenen Kompressorsystems (16) zur Druckluftversorgung des Nutzfahrzeugs (14), wobei das Kompressorsystem (16)

  - einen Kompressor (18) zur Drucklufterzeugung,
  - ein Getriebe (20) zur Übertragung von Drehmoment von dem Antriebsmotor (12) auf den Kompressor (18),
  - eine Kupplung (22) zum Trennen der Verbindung zwischen Kompressor (18) und Antriebsmotor (12) und
  - ein Steuergerät (10) zum Öffnen und Schließen der Kupplung (22) umfasst,

**dadurch gekennzeichnet,**
- **dass** die Kupplung (22) bei Überschreiten einer einstellbaren maximal erlaubten Kompressordrehzahl oder Motordrehzahl des Antriebsmotors (12) geöffnet wird und
- **dass** die geöffnete Kupplung (22) zeitweise geschlossen wird, während die Motordrehzahl größer als die maximal erlaubte Motordrehzahl ist.

8. Verfahren nach Anspruch 7, **dadurch gekennzeichnet, dass** die Kupplung (22) geöffnet wird, wenn ein in dem Druckluftversorgungssystem (24) des Nutzfahrzeugs (14) vorhandener Druck einen einstellbaren Abschaltdruck übersteigt.

9. Verfahren nach Anspruch 7 oder 8, **dadurch gekennzeichnet, dass** die Kupplung (22) geöffnet wird, während der Antriebsmotor (12) gestartet wird.

10. Verfahren nach einem der Ansprüche 7 bis 9, **dadurch gekennzeichnet, dass** die Kupplung (22) geöffnet wird, wenn eine gemessene Temperatur des Kompressors (18) eine einstellbare maximal erlaubte Temperatur übersteigt.

11. Verfahren nach einem der Ansprüche 7 bis 10, **dadurch gekennzeichnet, dass** die Kupplung (22) zeitweise geschlossen wird, während eine gemessene Temperatur des Kompressors (18) eine einstellbare maximal erlaubte Temperatur übersteigt.

12. Verfahren nach einem der Ansprüche 7 bis 11, **dadurch gekennzeichnet, dass** das Getriebe (20) die Motordrehzahl mit einer Übersetzung kleiner als Eins auf den Kompressor (18) überträgt.

**Claims**

1. Compressor system (16) for the compressed air supply of a utility vehicle (14), the compressor system (16) comprising

    - a compressor (18) for compressed air generation,
    - a transmission (20) for the transfer of torque from an engine (12) to the compressor (18),
    - a clutch (22) for separating the connection between the compressor (18) and the engine (12), and
    - a control apparatus (10) for opening and closing the clutch (22),

    **characterized in that** the control apparatus (10) is suitable for opening the clutch (22) when an adjustable maximum permitted compressor rotational speed or engine rotational speed of the engine (12) is overshot and for temporarily closing the open clutch (22) while the engine rotational speed is higher than the maximum permitted engine rotational speed.

2. Compressor system (16) according to Claim 1, **characterized in that** the control apparatus (10) is suitable for opening the clutch (22) when a pressure present in the compressed air supply system (24) of the utility vehicle (14) overshoots an adjustable cut-off pressure.

3. Compressor system (16) according to Claim 1 or 2, **characterized in that** the control apparatus (10) is suitable for opening the clutch (22) while the engine (12) is being started.

4. Compressor system (16) according to one of the preceding claims, **characterized in that** a temperature sensor (26) is provided, which detects the temperature of the compressor (18).

5. Compressor system (16) according to one of the preceding claims, **characterized in that** the transmission (20) has a step-up lower than one.

6. Utility vehicle (14) having a compressor system (16) according to one of the preceding claims.

7. Method for controlling a compressor system (16), driven by an engine (12) of a utility vehicle (14), for the compressed air supply of the utility vehicle (14), the compressor system (16) comprising

    - a compressor (18) for compressed air generation,
    - a transmission (20) for the transfer of torque from the engine (12) to the compressor (18),
    - a clutch (22) for separating the connection between the compressor (18) and the engine (12), and
    - a control apparatus (10) for opening and closing the clutch (22),
    **characterized**
    - **in that** the clutch (22) is opened when an adjustable maximum permitted compressor rotational speed or engine rotational speed of the engine (12) is overshot, and
    - **in that** the open clutch (22) is temporarily closed while the engine rotational speed is higher than the maximum permitted engine rotational speed.

8. Method according to Claim 7, **characterized in that** the clutch (22) is opened when a pressure present in the compressed air supply system (24) of the utility vehicle (14) overshoots an adjustable cut-off pressure.

9. Method according to Claim 7 or 8, **characterized in that** the clutch (22) is opened while the engine (12) is being started.

10. Method according to one of Claims 7 to 9, **characterized in that** the clutch (22) is opened when a measured temperature of the compressor (18) overshoots an adjustable maximum permitted temperature.

11. Method according to one of Claims 7 to 10, **characterized in that** the clutch (22) is temporarily closed while a measured temperature of the compressor (18) overshoots an adjustable maximum permitted temperature.

12. Method according to one of Claims 7 to 11, **characterized in that** the transmission (20) transfers the engine rotational speed to the compressor (18) with a step-up lower than one.

**Revendications**

1. Système (16) de compresseur pour l'alimentation en air comprimé d'un véhicule (14) utilitaire, le système (16) de compresseur comprenant

    - un compresseur (18) de production d'air comprimé,
    - une transmission (20) de transmission de couple d'un moteur (12) d'entraînement au compresseur (18),
    - un accouplement (22) pour couper la liaison entre le compresseur (18) et le moteur (12) d'entraînement et
    - un appareil (10) de commande pour ouvrir et fermer l'accouplement (22),

    **caractérisé en ce que** l'appareil (10) de commande est propre à ouvrir l'accouplement (22), si un régime du compresseur ou un régime du moteur (12) d'entraînement réglable et permis au maximum est dépassé et pour fermer de temps en temps l'accouplement (22) ouvert, pendant que le régime du moteur est plus grand que le régime du moteur permis au maximum.

2. Système (16) de compresseur suivant la revendication 1, **caractérisé en ce que** l'appareil (10) de commande est propre à ouvrir l'accouplement (22), si une pression, présente dans le système (24) d'alimentation en air comprimé du véhicule (14) utilitaire, dépasse une pression réglable d'interruption.

3. Système (16) de compresseur suivant la revendication 1 ou 2, **caractérisé en ce que** l'appareil (10) de commande est propre à ouvrir l'accouplement (22) pendant le démarrage du moteur (12) d'entraînement.

4. Système (16) de compresseur suivant l'une des revendications précédentes, **caractérisé en ce qu'**il est prévu une sonde (26) de température, qui détecte la température du compresseur (18).

5. Système (16) de compresseur suivant l'une des revendications précédentes, **caractérisé en ce que** la transmission (20) a une démultiplication plus petite que un.

6. Véhicule (14) utilitaire ayant un système (16) de compresseur suivant l'une des revendications précédentes.

7. Procédé de commande d'un système (16) de compresseur entraîné par un moteur (12) d'entraînement d'un véhicule (14) utilitaire et alimentant le véhicule (14) utilitaire en air comprimé, le système (16) de compresseur comprenant

    - un compresseur (18) de production d'air comprimé,
    - une transmission (20) de transmission de couple d'un moteur (12) d'entraînement au compresseur (18),
    - un accouplement (22) pour couper la liaison entre le compresseur (18) et le moteur (12) d'entraînement et
    - un appareil (10) de commande pour ouvrir et fermer l'accouplement (22),
    **caractérisé**
    - **en ce que** l'on ouvre l'accouplement (22) si un régime du compresseur ou du moteur (12) d'entraînement réglable et permis au maximum est dépassé et
    - **en ce que** l'on ferme de temps en temps l'accouplement (22) ouvert, pendant que le régime du moteur est plus grand que le régime du moteur permis au maximum.

8. Procédé suivant la revendication 7, **caractérisé en ce que** l'on ouvre l'accouplement (22) si une pression présente dans le système (24) d'alimentation en air comprimé du véhicule (14) utilitaire dépasse une pression d'interruption réglable.

9. Procédé suivant la revendication 7 ou 8, **caractérisé en ce que** l'on ouvre l'accouplement (22) pendant que l'on fait démarrer le moteur (12) d'entraînement.

10. Procédé suivant l'une des revendications 7 à 9, **caractérisé en ce que** l'on ouvre l'accouplement (22) si une température mesurée du compresseur (18) dépasse une température réglable permise au maximum.

**11.** Procédé suivant l'une des revendications 7 à 10, **caractérisé en ce que** l'on ferme de temps en temps l'accouplement (22) pendant qu'une température mesurée du compresseur (18) dépasse une température réglable permise au maximum.

**12.** Procédé suivant l'une des revendications 7 à 11, **caractérisé en ce que** la transmission (20) transmet au compresseur (18) le régime du moteur à une démultiplication plus petite que un.

Fig. 1

EP 2 234 855 B1

Fig. 2

EP 2 234 855 B1

Fig.3

U/min

EP 2 234 855 B1

Fig. 4

130

Kupplung
schließen

Nein

100

Drehzahl zu
groß?

Ja

120

Daten
speichern

110

Kupplung
öffnen

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

*   EP 1396406 A